**Europäisches Patentamt**

**European Patent Office**

**Office européen des brevets**

(11) Veröffentlichungsnummer: **0 291 635 B1**

(12) **EUROPÄISCHE PATENTSCHRIFT**

(45) Veröffentlichungstag der Patentschrift: **21.11.91**

(51) Int. Cl.⁵: **A01G 27/00, A01G 9/02**

(21) Anmeldenummer: **88102004.4**

(22) Anmeldetag: **11.02.88**

(54) **Bewässerungsboden.**

(30) Priorität: **24.04.87 DE 3713729**

(43) Veröffentlichungstag der Anmeldung:
**23.11.88 Patentblatt 88/47**

(45) Bekanntmachung des Hinweises auf die
Patenterteilung:
**21.11.91 Patentblatt 91/47**

(84) Benannte Vertragsstaaten:
**AT BE CH DE ES FR GB GR IT LI LU NL SE**

(56) Entgegenhaltungen:
**DE-A- 3 502 296**
**DE-C- 603 978**
**GB-A- 2 015 314**

(73) Patentinhaber: **Riesselmann & Sohn**
**Brandstrasse**
**W-2842 Lohne/Riessel(DE)**

(72) Erfinder: **Kühling, Franz**
**Apfelweg 6**
**W-2842 Lohne/Oldenburg(DE)**

(74) Vertreter: **Müller, Enno et al**
**Rieder & Partner Corneliusstrasse 45**
**W-5600 Wuppertal 11(DE)**

Rank Xerox (UK) Business Services

## Beschreibung

Die Erfindung betrifft ein in Form eines Blumentopfes oder dergl. ausgebildetes Pflanzengefäß, wie es im Hauptanspruch als bekannt vorausgesetzt ist.

Derartige Pflanzengefäße sind einerseits in mehrteiliger, andererseits in einteiliger Ausführung bekannt.

Eine einteilige Ausführungsform ist beispielsweise in dem DE-GM 1 777 104 beschrieben. Der Blumentopf gemäß diesem Gebrauchsmuster besitzt einen Boden mit kreisförmig ausgebildeter Faltung, wobei die Faltenböden im Querschnitt relativ breit sind, die Faltenspitzen dagegen relativ schmal. Innerhalb der ausgebildeten Falten kann sich Wasser ansammeln, wobei jedoch gleichzeitig immer auch die Faltenböden die Erdauflagefläche bilden. Im Faltungsbereich kann sich daher leicht aufgrund in der Blumenerde befindlicher organischer Bestandteile eine Fäulnis einstellen. Im mittleren Bereich der Faltenausbildung ist im Boden ein Abflußloch ausgebildet. In diesem mittleren Bereich kann also kein Wasser gespeichert werden. Es ist auch praktisch unmöglich, aufgrund der bodenseitig ausgebildeten Abflußöffnung, von unten, etwa durch Einsetzen des Blumentopfes in ein Wasserbad, Wasser nachzufüllen.

Bei einer mehrteiligen Ausführung eines derartigen Blumentopfes, wie sie etwa aus der US-PS 3 975 860 bekannt ist, ist das Wasserreservoir getrennt von der Blumenerde angeordnet. Die Abtrennung erfolgt durch eine Einlegescheibe, welche mit Löchern versehen ist. Durch in der Außenwand des Blumentopfes, unterhalb der Einlegescheibe, ausgebildeten Öffnungen, kann von außen Wasser in das Wasserreservoir nachgefüllt werden. Diese Bauform ist herstellungstechnisch aufwendig und auch gebrauchsnachteilig. Beides hauptsächlich resultierend aus der Mehrteiligkeit. Die Zerstörungsgefahr ist erheblich, dies insbesondere beim Umtopfen, wenn z.B. die Einlegescheibe durch Kleinwurzeln, die in Löcher der Einlegescheibe eingewachsen sind, mitsamt dem Erdballen aus dem Pflanzengefäß herausgezogen wird.

Darüber hinaus ist noch ein Pfanzengefäß aus der DE-OS 35 02 296 bekanntgeworden, das dreiteilig aufgebaut ist. Zunächst ist eine Trägerplatte vorgesehen, die dort aus einer Schaumkunststoffplatte besteht. Im Innenraum der Trägerplatte sind Höcker oder Rippen ausgebildet, die bis zur Plattenoberseite reichen. Diese Höcker oder Rippen haben jeweils einen Abstand voneinander, der einer Daumenbreite (ca. 20 mm) entspricht. In der Mitte des bekannten Pflanzengefäßes ist eine durchgehende Mittelrille ausgebildet. In diese Mittelrille taucht ein Dochtlappen ein, der im übrigen auf den Kopfflächen der Rippen aufliegt. Oberhalb des Dochtlappens ist sodann noch ein durchgehendes Bewässerungsvlies vorgesehen. Erst auf diesem Vlies befindet sich die Blumenerde und die darin befindlichen Pflanzen.

Aufgabe der Erfindung ist es, ausgehend von dem zuvor aufgezeigten Stand der Technik, ein gattungsgemäß ausgebildetes Pflanzengefäß so auszugestalten, daß bei möglichster Beibehaltung der Trennung des Wasserreservoirs von der Blumenerde bei vereinfachter Bauform eine erheblich verbesserte Handhabung gegeben ist.

Diese Aufgabe ist bei der im Anspruch 1 angegebenen Erfindung gelöst.

Zufolge dieser Ausgestaltung ist ein in Form eines Blumentopfes oder dergl. ausgebildetes Pflanzengefäß geschaffen mit im Bodenbereich vorgesehenem, unterhalb einer Erdauflagefläche liegendem Wasserreservoir, welches einfacher herstellbar, stabiler und optimal zu handhaben ist. Es besteht ohne weiteres die Möglichkeit, die das abgeteilte Wasserreservoir bildenden Erhebungen materialeinheitlich mit dem Gefäß herzustellen, sofern dieses beispielsweise aus Kunststoff produziert wird. Dabei bereitet die Entformung trotz der im Bodenbereich vorliegenden Erhebungen keinerlei Schwierigkeiten. Es ergibt sich sogar kein wesentlich höherer Materialanteil als bei denjenigen Lösungen, bei welchen ein Einlageboden - gegebenenfalls mit Stützfüßen- vorgesehen wird. Die Lösung ist auch wachstumstechnisch vorteilhafter, insbesondere wenn das etwaige Umtopfen von Pflanzen berücksichtigt wird; etwaige in die Fugen hineingewachsene Kleinwurzeln lassen sich beim Umtopfen aus den Fugen leicht und beschädigungsfrei herausziehen, was erfahrungsgemäß nicht der Fall ist, sofern solche Kleinwurzeln durch Löcher eines Siebes in einen sich dann wieder erheblich erweiternden Freiraum hineinwachsen. Es wurde dabei sogar gefunden, daß dieses Einwachsen der Feinwurzeln in die Fugen in nur unbeachtlichem Umfange stattfindet, so daß auch eine diesbezügliche kontinuierliche Verkleinerung des Wasserreservoirs entfällt. Andererseits ist aber bei der erfindungsgemäßen Gestaltung die Vorteilhaftigkeit der Trennung des Wasserreservoirs von der Blumenerde beibehalten. Es gibt keine Bereiche von Blumenerde, die ständig in das Wasserreservoir eingetaucht sind, was etwa mit einer großen Fäulnisneigung verbunden ist. Die von den Kopfflächen der Erhebungen gebildete Erdauflagefläche hat im übrigen eine erhebliche Stabilität und kann beschädigungsfrei große Drucke, insbesondere beim Eintopfen aushalten. In Ausgestaltung der Erfindung ist vorgesehen, daß eine Öffnung, etwa eine Überlauföffnung für das Wasser oder auch eine Einfüllöffnung für das Wasser, in einer Kopffläche ausgebildet ist, unterhalb einer dieselbe im wesentlichen überspannenden Dachausformung. Von oben betrachtet ist die Öffnung vollständig oder im wesentlichen überdeckt, während seitliche, bis auf die Kopffläche reichende Schlitze oder Öffnungen vorhanden sind, durch welche Wasser ein- und austreten kann. Die Dachausformung ist vorteilhaft an eine Kopffläche angeformt. Darüberhinaus und alternativ hierzu kann eine Öffnung als Randanschnitt einer Erhebung gebildet sein. Hierbei wird auf eine gesonderte Überdeckung der Öffnung verzichtet, jedoch erstreckt sich die Öffnung hauptsächlich in vertikaler Richtung und befindet sich ihre wesentliche Länge im oberen Bereich der Fugen, die das Wasserreservoir bilden. In beiden Fällen sind die Öffnungen demnach unterhalb der Erdauflagefläche vorgesehen, welche im Falle der in den Kopfflächen ausgebildenten Öffnungen durch die Dachabdeckung gebildet ist. Hierbei ist es, wie vorstehend auch schon ausgeführt, ausreichend, daß die Öffnungen im wesentlichen unterhalb der Erdauflagefläche vorgesehen sind. Soweit die freie Fläche der Öffnungen ein derart geringes Ausmaß besitzt, daß Pflanzenerde nicht hindurchdringen kann, kann das Pflanzengefäß seine Funktion erfüllen. Desweiteren ist vorgesehen, daß die Erhebungen beispielsweise als Stollen ausgebildet sind und quadratischen Grundriß besitzen. Dieses ist formtechnisch günstig und auch im Hinblick auf die notwendige Materialmenge in Relation zur Größe der Fugen und der von den Oberflächen gebildeten Erdauflagefläche. Der Materialverbrauch läßt sich erheblich reduzieren, wenn erfindungsgemäß die Erhebungen bzw. die Stollen hohl sind; ihre Öffnung zur Gefäßunterseite hin bringt dabei die optimale Lösung für das Entformen des einstückig hergestellten Pflanzengefäßes aus der Kunststoffspritzform. In weiterer Ausgestaltung kann das Pflanzengefäß Erhebungen in Form von in den Boden verlaufenden Spiralen besitzen. Auch können die Erhebungen als konzentrische Kreiserhebungen bzw. Teilkreiserhebungen ausgebildet sein. Die spezielle Gestaltung der Wasserüberlauföffnungen ist vor allem funktionstechnisch optimal. Dies vor allem deshalb, weil sie sich zufolge der von Ihnen gebildeten Randeinschnitte bis in eine tieferliegende Ebene und entsprechende Größe bringen lassen. Die Erdauflagefläche wird praktisch nicht verkleinert. Der Überlauf ist aber an höchstmöglicher Stelle angeordnet.

Der Gegenstand der Erfindung ist auf der beiliegenden Zeichnung in einem Ausführungsbeispiel dargestellt. Es zeigen:

Fig. 1    das in Form einer Hänge-Ampel ausgestaltete Blumentopf-Pflanzengefäß in Ansicht;

Fig. 2    eine Draufsicht in das Gefäßinnere;

Fig. 3    eine Schnittdarstellung einer vergrößert dargestellten Erhebung, geschnitten entlang der Linie III-III in Fig. 4;

Fig. 4    eine Draufsicht auf eine Erhebung, mit in der Kopffläche ausgebildeter Öffnung;

Fig. 5    einen Schnitt durch den Gegenstand gemäß Fig. 2, entlang der LinieV-V;

Fig. 6    eine vergrößerte Draufsicht auf den mittleren Bereich des Gegenstandes gemäß Fig. 2;

Fig. 7    eine alternative Form einer Hänge-Ampel in der Seitenansicht;

Fig. 8    eine Draufsicht einer alternativen Ausführungsform des Gefäßinneren;

Fig. 9    eine Unteransicht;

Fig. 10    eine vergrößerte Aufsicht auf einen Teilbereich des Bodens;

Fig. 11    einen Schnitt entlang der Linie XI-XI in Fig. 10;

Fig. 12    einen Schnitt entlang der Linie XII-XII in Fig. 13 bzw. Fig. 14;

Fig. 13    eine Draufsicht auf eine alternative Ausführungsform des Bodens;

Fig. 14    eine Draufsicht auf eine weitere alternative Ausführungsform des Bodens.

Das Pflanzengefäß, ausgebildet in Form eines Blumentopfes, besitzt die vom oberen Rand 1 ausgehende Aufhängezüge 2, die in dem gemeinsamen Aufhängehaken zusammenlaufen. Die Aufhängezüge sind im Bereich der bajonettähnlich gestalteten Schlitze 4 gefesselt. Das gesamte Pflanzengefäß ist, abgesehen von den Aufhängezügen 3, materialeinheitlich aus Kunststoff gefertigt, vorzugsweise gespritzt.

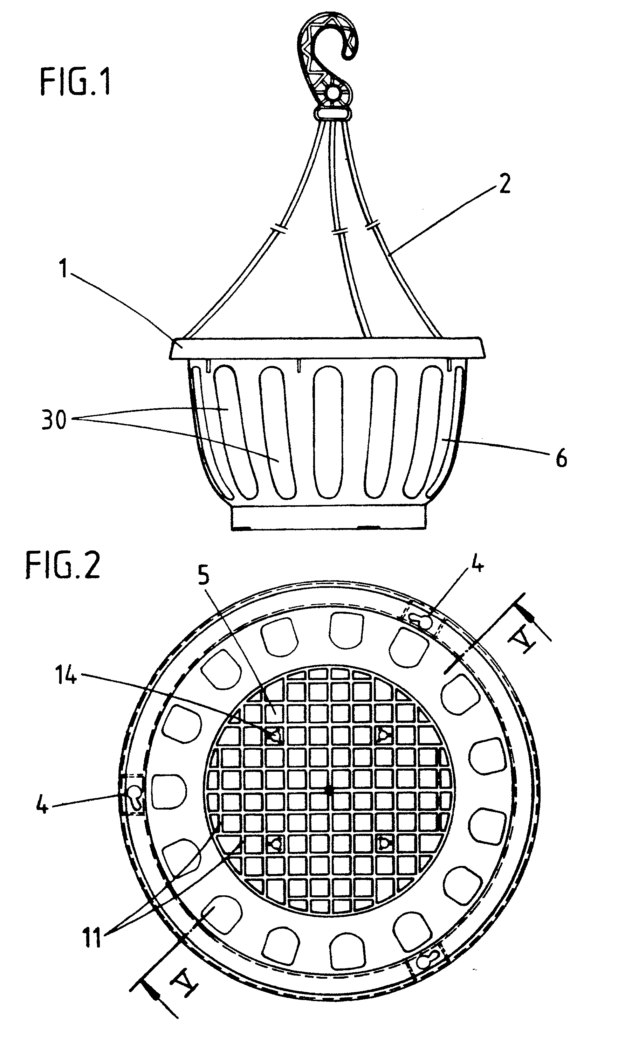

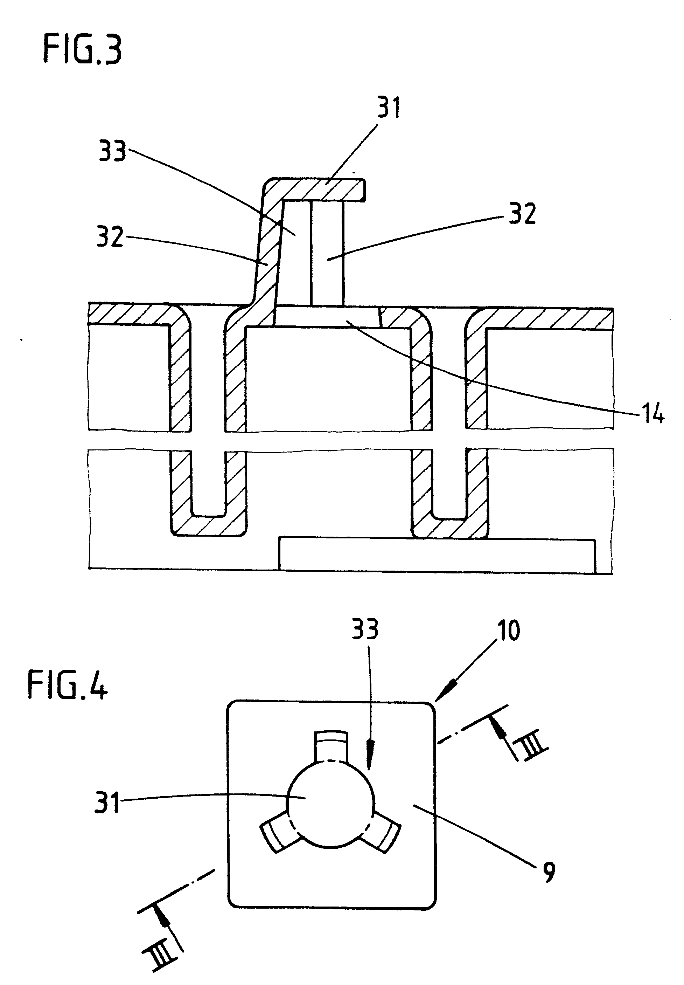

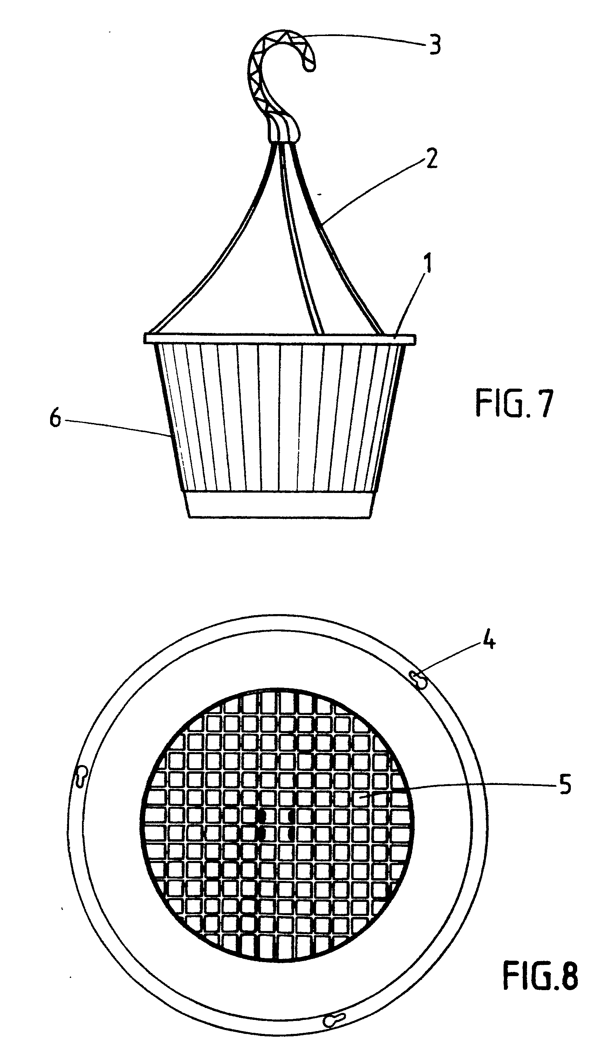

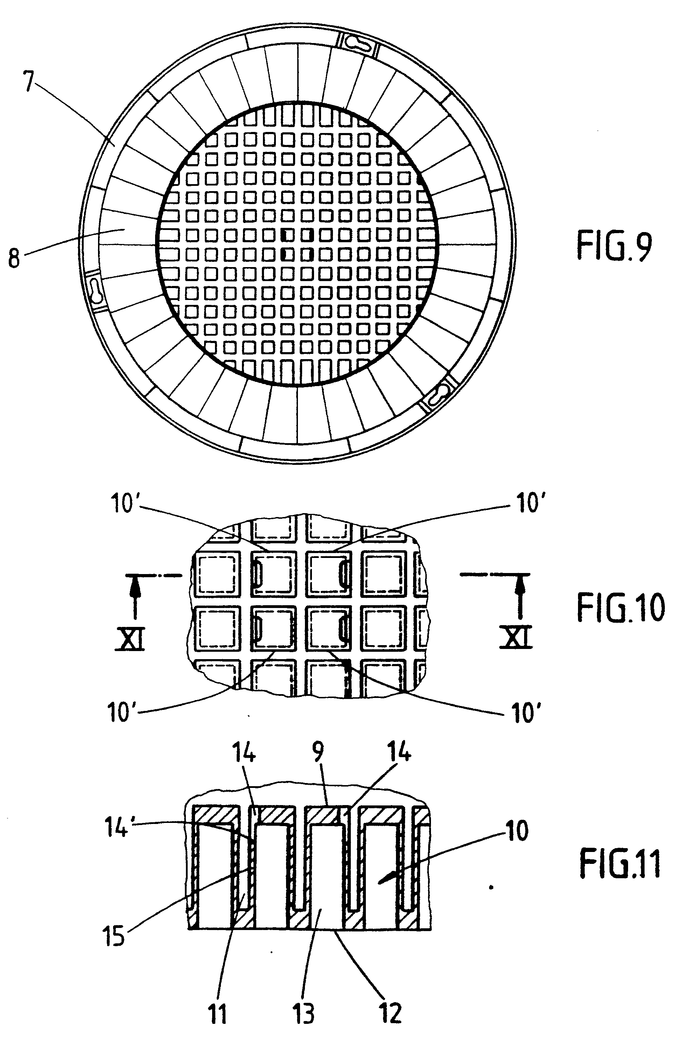

Die vom Boden 5 ausgehende Topfwandung 6 bildet dabei zufolge der U-förmig gestalteten abgewinkelten Form den nach unten hin offenen U-Ringraum 7. Die Außenfläche der Topfwandung 6 ist mit leicht einwärts gerundeten, im wesentlichen vertikal verlaufenden Einbuchtungen 30 versehen. Beim Gegenstand der Fig. 7 bzw. Fig. 9 sind dagegen facettenartige Flächen 8 ausgebildet. Der Boden 5 bildet mit den Kopfflächen 9 (vergl. beispielsweise auch Fig. 4) der einzeln stehenden Stollen 10 die Erdauflagefläche des gesamten Pflanzengefäßes. Zwischen den in Einzelstellung angeordneten Stollen 10 verbleiben die Fugen 11, die als Wasserreservoir dienen. Die Stollen selbst sind bei dem Ausführungsbeispiel gemäß den Figuren 2, 5 und 8, 9 in quadratischem Grundriß gestaltet (siehe insbesondere Fig. 4). Sie formen einen zur Gefäßunterseite 12 offenen Hohlraum 13.

Bei dem Ausführungsbeispiel gemäß Fig. 2 sind vier Öffnungen 14 ausgebildet. Wie im einzelnen Fig. 3 zu entnehmen ist, ist eine derartige Öffnung 14 in der Kopffläche 9 eines Stollens 10 ausgebildet und von einer Dachausformung 31 überspannt. Die Dachausformung 31 ist mittels dreier Stege 32 mit der Kopffläche 9 verbunden. Durch die so geschaffenen Öffnungen 33 kann etwa zuviel eingegebenes Wasser ausfließen, oder es kann sogar, wenn das Pflanzengefäß in ein Wasserbad gestellt wird, von unten Wasser eindringen.

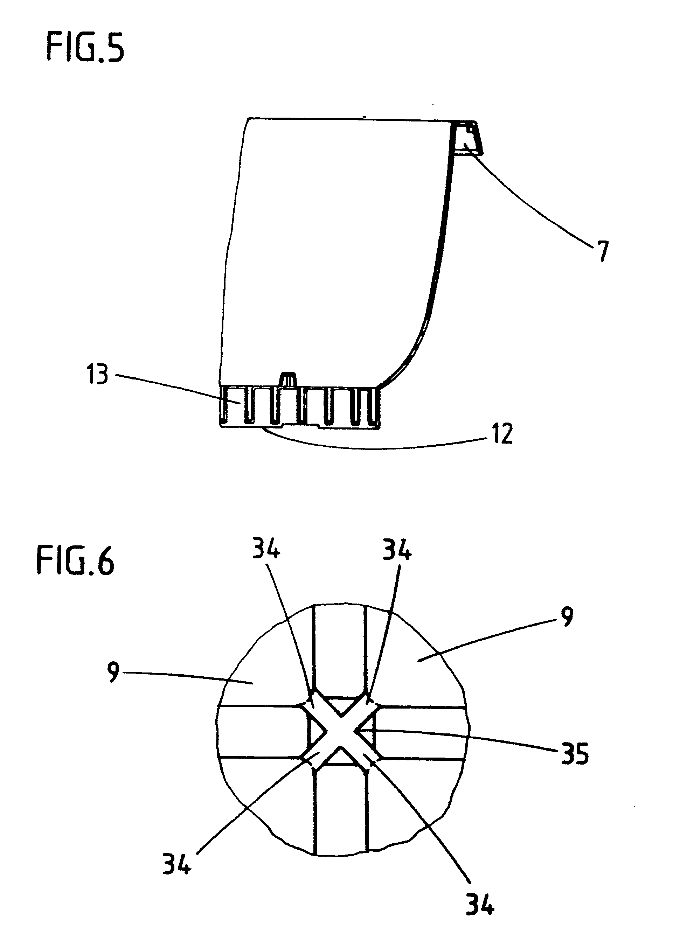

In Fig. 6 ist zu erkennen, daß die vier mittleren Stollen 34 über eine kreuzstegartige Ausformung 35 miteinander verbunden sind, was sich insbesondere aus formtechnischen Gründen als vorteilhaft erweist.

Bei der Ausführungsform gemäß Fig. 8 bzw. Fig. 9 sind die vier zentral angeordneten Mittelbereichsstollen 10' mit Überlauföffnungen 14 ausgestattet. Diese sind erzielt dadurch, daß die Seitenwandabschnitte 15 dieser Stollen einschließlich der Kopffläche 9 angeschnitten sind. Die tiefstliegende Kante 14' dieser Überlauföffnungen bestimmt dabei das Überlauf-Niveau des von dem Hohlraum der Fugen 11 gebildeten gesamten Wasserreservoirs. Alle Fugen 11 des gesamten Bodens 5 stehen zwischenwandlos bei dieser Ausführungsform in Verbindung miteinander.

Die Kantenlänge der Kopffläche 9 liegt etwa bei 10 mm und die Breite der Fugen 11 etwa bei 2 - 3 mm; die Höhe der Stollen beträgt vorzugsweise 2 - 4 cm, kann jedoch weitgehendst frei angepaßt werden an das beabsichtigte Volumen des Wasserreservoirs.

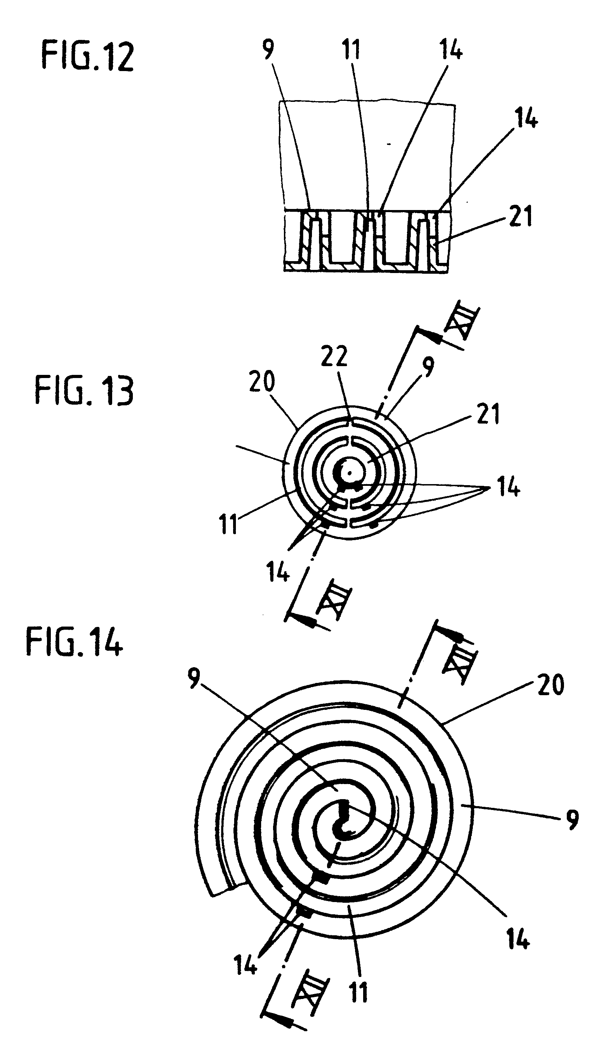

Bei der Ausführungsform gemäß Fig. 14 sind die Erhebungen als Spiralerhebungen 20 ausgebildet. Als Überlauföffnung 14 kann zunächst bei einer solchen Ausgestaltung lediglich eine einzige am innersten Ende der Spiralerhebung 20 vorgesehen sein. Zur schnelleren Befüllung bzw. zum schnelleren Ablauf von eventuell vorhandenem Überlaufwasser, kann es sich jedoch empfehlen, noch weitere Überlauföffnungen 14 auszubilden, in radialem Abstand zu der ersten, innersten Überlauföffnung 14.

Bei der Ausführungsform gemäß Fig. 13 sind konzentrische Kreiserhebungen 21 bzw. Teilkreiserhebungen 22 vorgesehen. Hierbei ist an jeder Kreiserhebung 21 bzw. jeder Teilkreiserhebung 22 ein Überlauf 14 ausgebildet, um die entsprechenden Zwischenräume jeweils als Wasserreservoir nutzen zu können. Auch bei den Ausführungsformen gemäß Fig. 13 bzw. Fig. 14 liegt die Breite der Kopfflächen 9 etwa bei 10 mm und die Breite der Fugen 11 etwa bei 2 bis 3 mm; die Höhe der Erhebungen beträgt auch hier vorzugsweise 2 bis 4 cm, kann jedoch weitestgehend gleichfalls frei angepaßt werden an das beabsichtigte Volumen des Wasserreservoirs.

Fig. 12 stellt einen Schnitt durch die Ausführungsform gemäß Fig. 13 bzw. Fig. 14 entlang den angegebenen Linien dar. Es ist ersichtlich, daß die Öffnungen 14 bei diesem Ausführungsbeispiel in gleicher Weise wie bei dem Ausführungsbeispiel gemäß Figuren 8 und 9 ausgebildet sind. Alternativ können die Öffnungen aber auch in der mit Bezug auf die Figuren 2, 3, 4 und 5 erläuterten Weise ausgebildet sein.

Alle in der vorstehenden Beschreibung, der Zeichnung und den Ansprüchen offenbarten Merkmale der Erfindung sind für die Verwirklichung des Erfindungsgedankens in beliebiger Kombination von Bedeutung.

**Patentansprüche**

1. In Form eines Blumentopfes oder dergleichen ausgebildetes Pflanzengefäß mit im Bodenbereich unterhalb einer Erdauflagefläche liegendem Wasserreservoir und zugeordneten, im wesentlichen unterhalb der Erdauflagefläche ausgebildeten, Öffnungen (14), wobei einwärts gerichtete Erhebungen ausgebildet sind und Fugen zwischen den Erhebungen als Wasserreservoir dienen, dadurch gekennzeichnet, daß die Erdauflagefläche unmittelbar von den Kopfflächen (9) der Erhebungen (10) gebildet ist, die entsprechend eng aneinander ausgebildet sind, so daß eine Trennung des Wasserreservoirs von der Blumenerde gegeben ist.

2. Pflanzengefäß nach Anspruch 1, dadurch gekennzeichnet, daß die Öffnung (14) in einer Kopffläche ausgebildet ist, unterhalb einer dieselbe im wesentlichen überspannenden Dachausformung (31).

3. Pflanzengefäß nach einem der vorhergehenden Ansprüche, dadurch gekennzeichnet, daß die Öffnungen (14) von Randanschnitten (14') der Erhebungen (10) gebildet sind.

4. Pflanzengefäß nach einem der vorhergehenden Ansprüche, dadurch gekennzeichnet, daß die Erhebungen als Stollen (10) ausgebildet sind und quadratischen Grundriß besitzen.

5. Pflanzengefäß nach einem der vorhergehenden Ansprüche, dadurch gekennzeichnet, daß die Erhebungen als in dem Boden (5) verlaufende Spiralerhebungen (20) ausgebildet sind.

6. Pflanzengefäß nach einem der vorhergehenden Ansprüche, dadurch gekennzeichnet, daß die Erhebungen als konzentrische Kreiserhebungen (21) bzw. Teilkreiserhebungen (22) ausgebildet sind.

7. Pflanzengefäß nach einem der vorhergehenden Ansprüche, dadurch gekennzeichnet, daß die Erhebungen (10), Spiralerhebungen (20), Kreiserhebungen (21) hohl gestaltet und zur Gefäßunterseite (12) hin offen sind.

**8.** Pflanzengefäß nach einem der vorhergehenden Ansprüche, dadurch gekennzeichnet, daß die Öffnungen (14) im Mittelbereich des Bodens (5) vorgesehen sind.

## Claims

**1.** Plant container in the shape of a flowerpot or the like, having a water reservoir situated in the bottom zone below a soil support surface and associated apertures (14), formed substantially below the coil support surface, inwardly-oriented elevations being formed and gaps between the elevations serving as a water reservoir, characterised in that the soil support surface is directly formed by the top surfaces (9) of the elevations (10), which are formed correspondingly close to each other, so that the water reservoir is separated from the soil for the plants.

**2.** Plant container according to Claim 1, characterised in that the aperture (14) is formed in a top surface below a roof shape (31) which substantially extends over the latter.

**3.** Plant container according to one of the preceding claims, characterised in that the apertures (14) are formed by edge cuts (14') in the elevations (10).

**4.** Plant container according to one of the preceding claims, characterised in that the elevations are formed as tunnels (10) and possess a square outline.

**5.** Plant container according to one of the preceding claims, characterised in that the elevations are formed as spiral elevations (20) extending in the bottom (5).

**6.** Plant container according to one of the preceding claims, characterised in that the elevations are formed as concentric circular elevations (21) or arcuate elevations (22).

**7.** Plant container according to one of the preceding claims, characterised in that the elevations (10), spiral elevations (20) and circular elevations (21) are of hollow design and are open towards the underside (12) of the container.

**8.** Plant container according to one of the preceding claims, characterised in that the apertures (14) are provided in the central zone of the bottom (5).

## Revendications

**1.** Récipient pour plantes sous forme de pot de fleurs ou similaire, comportant un réservoir d'eau situé dans la zone du fond, en-dessous d'une surface d'appui pour la terre, et des ouvertures (14) qui lui sont affectées, réalisées pour l'essentiel en-dessous de la surface d'appui pour la terre, des parties élevées dirigées vers l'extérieur étant réalisées et des intervalles entre les parties élevées servant de réservoir d'eau, caractérisé en ce que la surface d'appui pour la terre est formée directement par les surfaces supérieures (9) des parties élevées (10) qui sont réalisées de façon correspondante de manière à être très proches les unes des autres, de telle sorte que l'on obtient une séparation du réservoir d'eau d'avec la terre pour fleurs.

**2.** Récipient pour plantes selon la revendication 1, caractérisé en ce que l'ouverture (14) est ménagée dans une surface supérieure, en-dessous d'une partie en saillie formant toit (31) qui la surmonte pour l'essentiel.

**3.** Récipient pour plantes selon l'une des revendications précédentes, caractérisé en ce que les ouvertures (14) sont formées par des échancrures (14') pratiquées dans le bord des parties élevées (10).

**4.** Récipient pour plantes selon l'une des revendications précédentes, caractérisé en ce que les parties élevées sont conformées en nervures creuses (10) et ont, vues en plan, une forme carrée.

**5.** Récipient pour plantes selon l'une des revendications précédentes, caractérisé en ce que les parties élevées ont une forme de spirale (20) qui s'étend dans le fond (5).

**6.** Récipient pour plantes selon l'une des revendications précédentes, caractérisé en ce que les parties élevées ont une forme circulaire (21) ou partiellement circulaire (22) et sont concentriques.

**7.** Récipient pour plantes selon l'une des revendications précédentes, caractérisé en ce que les parties élevées (10), les parties élevées en forme de spirale (20), les parties élevées de forme circulaire (21) ont une forme creuse et sont ouvertes en direction du côté inférieur (12) du récipient.

**8.** Récipient pour plantes selon l'une des revendications précédentes, caractérisé en ce que les ouvertures (14) sont prévues dans la zone médiane du fond (5).

FIG.1

FIG.2

FIG.3

FIG.4

# FIG.5

# FIG.6

FIG.7

FIG.8

FIG.9

FIG.10

FIG.11

FIG.12

FIG.13

FIG.14